# EUROPEAN PATENT APPLICATION

(11) **EP 3 258 438 A1**
(43) Date of publication of application: **20.12.2017**
(21) Application number: 15881904.5
(22) Date of filing: 09.02.2015
(51) Int. Cl.: G06Q 40/02, G06F 13/00

(54) **BUSINESS COORDINATION SYSTEM AND BUSINESS COORDINATION METHOD**

(71) Applicant: Hitachi, Ltd., Tokyo 100-8280 (JP)
(72) Inventor: JIN, Yusuke, Tokyo 100-8280 (JP); YAMADA, Yuuichi, Tokyo 100-8280 (JP); MIYASHIGE, Jin, Tokyo 100-8280 (JP); KITAGAWA, Shinya, Tokyo 100-8280 (JP)
(74) Representative: Addiss, John William
(86) International application number: PCT/JP2015/053472
(87) International publication number: WO 2016/129028

(57) **Abstract**

To enhance the quickness and the efficiency of processing involved in collaboration between business systems of a financial institution, a hub system 100 of a business collaboration system 100 includes a communication apparatus 105 configured to execute communication processing with each channel and business systems of a financial institution; a storage apparatus 101 storing an allocation table 125 in which a mode of collaboration between business systems is defined by required quality of transaction processing in the financial institution; and a computation apparatus 104 configured to check predetermined information contained in a transaction message obtained from the channel or any of the business systems against the allocation table 125 and identify a mode of collaboration between business systems for corresponding transaction processing, issue a processing request for the transaction message to one or more of the business systems and acquire a processing result therefrom as a response to the request in accordance with definitions of collaborating targets and a sequence of collaboration indicated by the mode of collaboration, and execute processing of returning the processing result to the channel or the business system.

## Description

### [Technical Field]

The present invention relates to a business collaboration system and a business collaboration method.

### [Background Art]

For companies that possess many business systems and also involve execution of a large amount of collaboration processing between these business systems, the presence of a so-called hub system configured to interface the business systems is important. In particular, companies such as financial institutions that run mission-critical computer systems require such a hub system to have superior processing performance such as smooth and reliable collaboration processing and high throughput.

In this connection, as a conventional technique related to such a hub system, the following technique has been proposed. Specifically, hub-and-spoke systems have a problem in that the time taken to transmit a message is long and the response time taken to obtain a response message is long, and as a system to address this problem, an intersystem collaboration system has been proposed which, for example, is interposed between a certain number of first information systems and a certain number of second information systems and is configured to cause the first information systems and the second information systems to operate collaboratively with each other. The intersystem collaboration system is characterized by including: reception means for receiving a message transmitted from a first information system; protocol conversion means for performing protocol conversion between the protocol used in the message from the first information system and the protocol used in the collaboration system; transmission-destination acquisition means for acquiring a destination to which to forward the message from the first information system; path determination means for selecting, based on the received message, a particular-protocol direct path or a different path as a path through which to pass the received message to a second information system; and means for transmitting the received message from the first information system to the destination without the protocol of the received message converted by the protocol conversion means when the path determination means selects the particular-protocol direct path, and transmitting the received message from the first information system to the destination with the protocol of the received message converted by the protocol conversion means when the path determination means selects the different path (see Patent Literature 1).

### [Citation List]

### [Patent Literature]

[PTL 1] Japanese Patent Application Publication No. 2001-16274

### [Summary of Invention]

### [Technical Problem]

Financial institutions need to run new business systems developed in accordance with their business strategies and the like in parallel with many conventional business systems for substantially commodified businesses such as deposit and exchange. Among these business systems, a system that manages information frequently used by various businesses, such as customer information, is a target of collaboration processing for many other business systems. Meanwhile, due to the collaboration between these business systems, a vast amount of processing occurs at a hub system which functions for the collaboration processing between the systems and might possibly cause performance deterioration such as decrease in throughput. If this performance deterioration occurs in processing of businesses that require quickness, such as account management and settlement, it might lead to various problems including decrease in customer satisfaction, which is a serious problem for the financial institution.

Thus, an object of the present invention is to provide a technique that enhances the quickness and the efficiency of processing involved in collaboration between business systems of a financial institution.

### [Solution to Problem]

A business collaboration system of the present invention that solves the above-mentioned problem is characterized in that the business collaboration system includes: a communication apparatus configured to execute communication processing with each channel and business systems of a financial institution; a storage apparatus storing an allocation table in which a mode of collaboration between business systems is defined by required quality of transaction processing in the financial institution; and a computation apparatus configured to check predetermined information contained in a transaction message obtained from the channel or any of the business systems against the allocation table and identify a mode of collaboration between business systems for corresponding transaction processing, issue a processing request for the transaction message to one or more of the business systems and acquire a processing result therefrom as a response to the request in accordance with definitions of collaborating targets and a sequence of collaboration indicated by the mode of collaboration, and execute processing of returning the processing result to the channel.

Also, a business collaboration method of the present invention uses a computer system including a communication apparatus configured to execute communication processing with each channel and business systems of a financial institution and a storage apparatus storing an allocation table in which a mode of collaboration between business systems is defined by required quality of transaction processing in the financial institution, and is characterized in that the method includes causing the computer system to: check predetermined information contained in a transaction message obtained from the channel or any of the business systems against the allocation table and identify a mode of collaboration between business systems for corresponding transaction processing; issue a processing request for the transaction message to one or more of the business systems and acquire a processing result therefrom as a response to the request in accordance with definitions of collaborating targets and a sequence of collaboration indicated by the mode of collaboration; and execute processing of returning the processing result to the channel.

### [Advantageous Effect of Invention]

With the present invention, it is possible to enhance the quickness and the efficiency of processing involved in collaboration between business systems of a financial institution.

### [Brief Description of Drawings]

[Fig. 1] Fig. 1 is a diagram illustrating an example of a network configuration including a business collaboration system in an embodiment.
[Fig. 2] Fig. 2 is a diagram illustrating an example of the hardware configuration of a hub system in the embodiment.
[Fig. 3] Fig. 3 is a diagram illustrating an example of the hardware configuration of a business system in the embodiment.
[Fig. 4] Fig. 4 is a diagram illustrating an example of the configuration of an allocation table in the embodiment.
[Fig. 5] Fig. 5 is a diagram illustrating an example of the configuration of a conversion definition table in the embodiment.
[Fig. 6] Fig. 6 is a diagram illustrating an example of the configuration of a transaction management table in the embodiment.
[Fig. 7] Fig. 7 is a flowchart illustrating Processing Procedure Example 1 of a business collaboration method in the embodiment.
[Fig. 8] Fig. 8 is a flowchart illustrating Processing Procedure Example 2 of the business collaboration method in the embodiment.
[Fig. 9] Fig. 9 is a flowchart illustrating Processing Procedure Example 3 of the business collaboration method in the embodiment.

### [Description of Embodiment]

### --System Configuration--

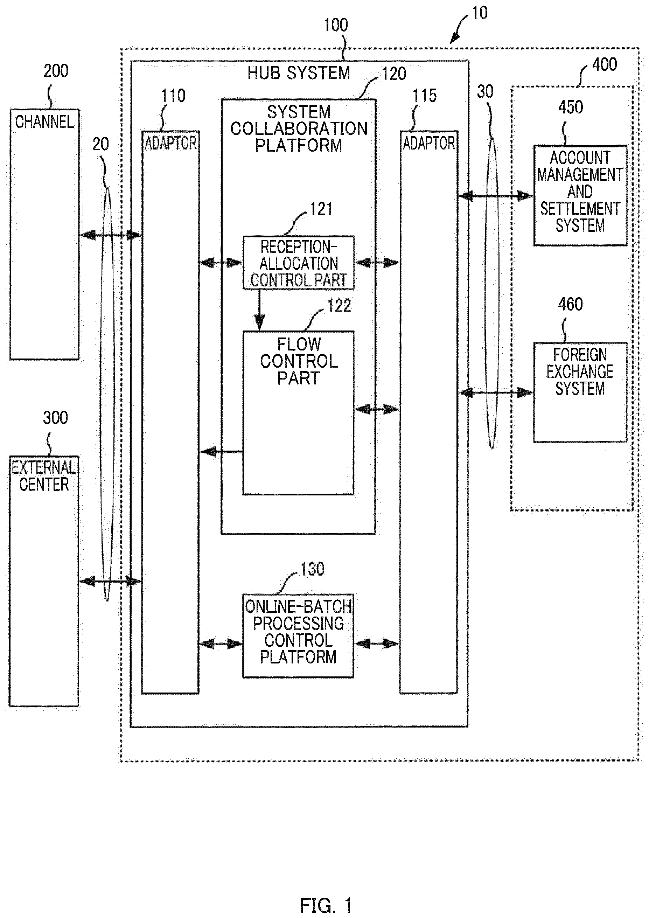

An embodiment of the present invention will be described below in detail with reference to the drawings. Fig. 1 is a diagram illustrating an example of a network configuration including a business collaboration system 10 in this embodiment. The business collaboration system 10, illustrated in Fig. 1, is a computer system for enhancing the quickness and the efficiency of processing involved in collaboration between business systems of a financial institution. Among a hub system 100 provided in a core banking system of the financial institution and business systems 400 which are targets of collaboration processing to be executed as appropriate by this hub system 100, the business collaboration system 10 includes at least the hub system 100. That is, the hub system 100 is the minimum configuration of the business collaboration system 10.

Note that the hub system 100 is configured to receive transaction messages from various channels 200 such as the institution's ATMs and office terminals and external centers 300 such as Zengin centers and integrated ATM centers, and process collaboration of businesses with such a transaction message as a trigger. Moreover, the channels 200 and the hub system 100 are communicatively coupled by a secure network 20, and the hub system 100 and the business systems 400 are coupled by a secure network 30.

The main functions of the above-described hub system 100 are as follows. Specifically, being interposed between the channels 200 and external centers 300 and the business systems 400, the hub system 100 has a function of absorbing the difference in interface between them. To do so, the hub system 100, in its adaptors 110, 115, has information on the correspondences and the rules of conversion between the protocols, message formats, and character codes supported by the channels 200, the external centers 400 and the business systems 400, and executes conversion processing as needed when transmitting and receiving transaction messages received from the channels 200 and the results of processing by the business systems 400.

Moreover, the hub system 100 corresponds to the main configuration in a business collaboration method in this embodiment, and has a function of calling one business system 400 or a plurality of business systems 400 as one service based on one transaction message, and implementing the transaction requested by the transaction message directly with the one business system 400 or through a series of business flows across the plurality of business systems. To do so, as exemplarily illustrated in Fig. 1, the hub system 100 has a system collaboration platform 120, and includes at least a reception-allocation control part 121 configured to manage allocation of and response to transaction messages received from the channels 200, for example, and a flow control part 122 configured to process collaboration between a plurality of business systems 400.

In addition, the hub system 100 has a online-batch processing control platform 130 and has a function of managing online-batch processing data introduction and execution statuses. Unlike so-called online real-time processing, online-batch processing is batch processing in terms of business, but handled inside the system as transaction like online real-time processing and is therefore processing that can be executed while maintaining consistency even during an online real-time service period. This online-batch processing control platform 130 is also configured to execute conversion processing between protocols, message formats, and character codes as needed by utilizing the above-mentioned adaptors 110, 115. Note that the example of the hub system 100 illustrated in Fig. 1 is a mode in which the one set of adaptors 110, 115 are responsible for the above-mentioned conversion processing, but a mode may be employed in which an adaptor is provided individually for the channels 200 and for the external centers 300.

### --Hardware Configuration--

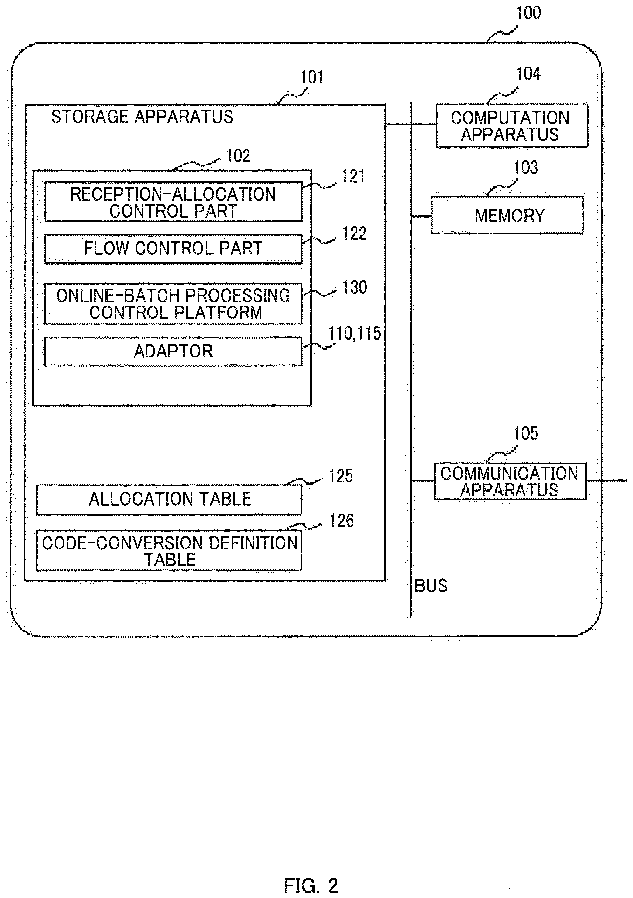

Next, the hardware configuration of each information processing apparatus included in the business collaboration system 10 will be described. Fig. 2 is a diagram illustrating an example of the configuration of the hub system 100 in this embodiment. The hub system 100 in this embodiment includes: a storage apparatus 101 constructed as an appropriate non-volatile storage element such as an SSD (Solid State Drive) or a hard disk drive; a memory 103 constructed as a volatile storage element such as an RAM; a computation apparatus 104 such as a CPU configured to, for example, read out a program 102 held in the storage apparatus 101 onto the memory 103 and execute it to perform overall control of the system itself, and also perform various types of determination, computation, and control processing; and a communication apparatus 105 coupled to the networks 20, 30 and being responsible for communication processing with other systems including the channels 200, the external centers 400, and the business systems 400. Note that in addition to the program 102 for implementing functions necessary for information processing apparatuses included in the business collaboration system 10 in this embodiment, the storage apparatus 101 stores data 110 necessary for various types of processing. This data 110 contains at least an allocation table 125 and a code-conversion definition table 126 to be described later.

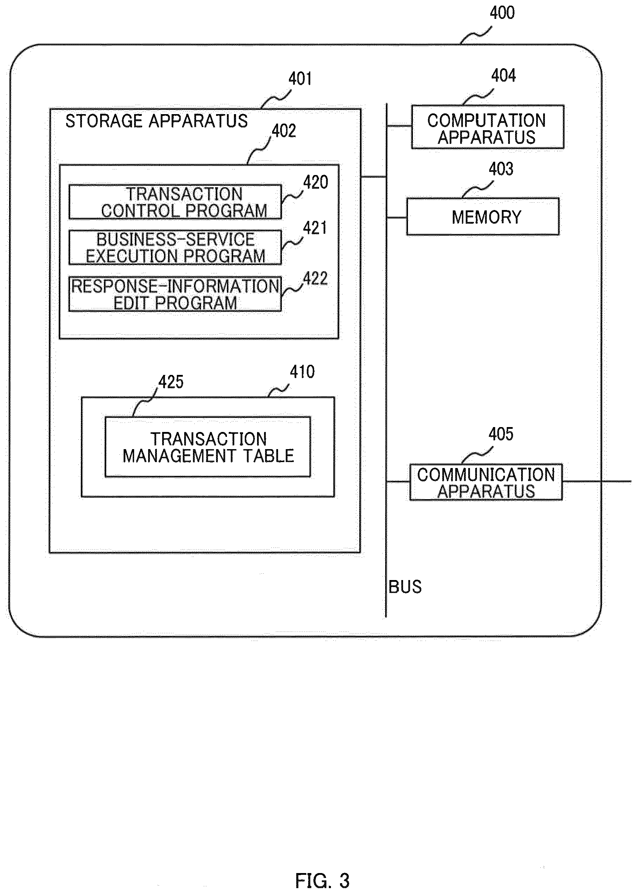

Also, each business system 400 as a target of the collaboration by the above-described hub system 100 has the hardware configuration exemplarily illustrated in Fig. 3. The business system 400 in this embodiment has a general computer hardware configuration. Like the hub system 100, it includes: a storage apparatus 401 constructed as an appropriate non-volatile storage element such as a hard disk drive; a memory 403 constructed as a volatile storage element such as a RAM; a computation apparatus 404 such as a CPU configured to, for example, read out a program 402 held in the storage apparatus 401 onto the memory 403 and execute it to perform overall control of the system itself, and also perform various types of determination, computation, and control processing; and a communication apparatus 405 coupled to the network 30 and being responsible for communication processing with the hub system 100.

In addition to the program 402 for implementing functions necessary for information processing apparatuses included in the business collaboration system 10 in this embodiment, the above-mentioned storage apparatus 401 stores data 410 necessary for various types of processing. This data 410 contains at least a transaction management table 425 to be described later. Meanwhile, the program 402 includes a transaction control program 420, a business-service execution program 421, and a response-information edit program 422. Among these, the transaction control program 420 is a program configured to control transaction processing in general at the business system 400 in this embodiment. Also, the business-service execution program 421 is a program configured to execute components corresponding to the financial services provided by the business system 400. For example, it is a program configured to execute various components as appropriate such as a customer component corresponding to deferred-fee-payment contract confirmation service, an exchange component corresponding to a transfer service to a different bank, a savings component corresponding to an ordinary-savings withdrawal service, and a foreign-currency-savings component corresponding to a foreign-currency-savings deposit service. Also, the response-information edit program 422 is a program in for example a account management and settlement system 450 and configured to combine the result of processing by the last one of a series of components in the sequence of execution and the processing result from a different component (s) in an appropriate manner as needed and return them to the hub system 100. This response-information edit program 422 is held in advance for each BF code.

### --Table Configuration--

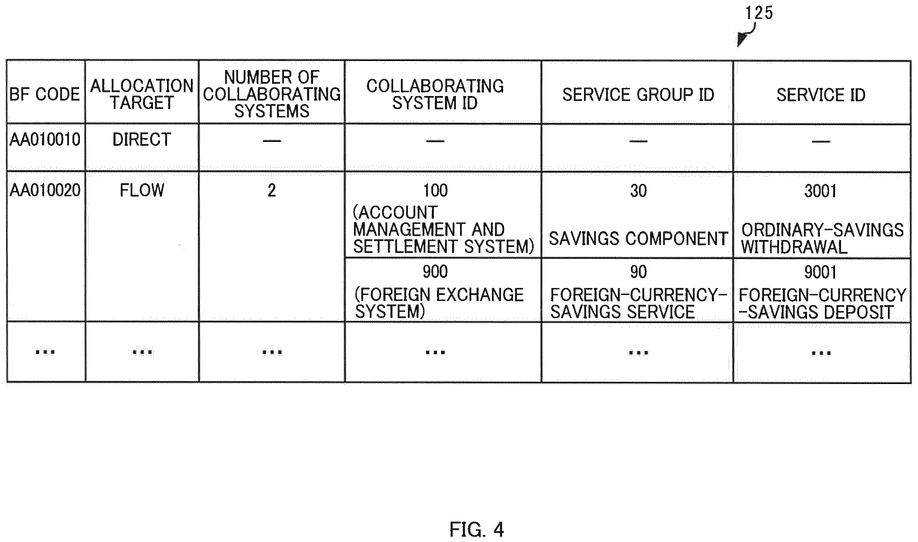

Next, specific configurations of the tables included in the above-described hub system 100 and business systems 400 will be described. Fig. 4 is a diagram illustrating an example of the configuration of the allocation table 125 in this embodiment. This allocation table 125 in this embodiment illustrated in Fig. 4 exemplarily corresponds to a business of "withdrawing money from an ordinary savings account and transferring it to a foreign-currency savings account in a foreign exchange system 460".

The allocation table 125 in this embodiment is a table in which the mode of collaboration between business systems is defined for each of transactions by the above-mentioned financial institution that differ in required quality. This allocation table 125 is a collection of records in each of which pieces of information on the method of handling a transaction message at the system collaboration platform 120, the mode of system collaboration, and a business process(es) are associated with each other with a BF code (business flow code) as a key. Note that while this embodiment presents the example using this allocation table 125, the collaboration between business systems may be defined as an XML definition body on a flow basis. That is, the present invention is not limited to the mode in which the definition of the mode of collaboration between business systems is described in a table and utilized.

Among these, the BF code is identification information identifying a series of processing flows to be executed by calling a business system (s) 400 in accordance with a transaction message, and corresponds to the name of the transaction. Also, the method of handling a transaction message is a value indicating an allocation target to which the transaction message is allocated and which is determined by the BF code indicated by the transaction message, and is any one of "direct", "flow", and "asynchronous", as exemplarily illustrated in Fig. 4. Among these, "direct" corresponds to a case where the transaction corresponding to a transaction message requires quickness, and corresponds to handling involving transmitting the transaction message directly to the (single) corresponding business system 400 through the adaptor 115 and acquiring the result of the processing from the business system 400. This embodiment assumes a situation where among the business systems 400, only the account management and settlement system 450 executes the processing, for example. Also, "flow" corresponds to handling involving executing a series of processes originating from a transaction message between a plurality of predetermined business systems 400. Also, "asynchronous" corresponds to handling corresponding to the online-batch processing process.

Further, as exemplarily illustrated in Fig. 4, the mode of system collaboration in the above-described allocation table 125 includes the number of collaborating business systems 400 and an ID of each business system 400. Furthermore, the business process is information indicating attributes of the transaction uniquely corresponding to the above-mentioned BF code, and includes values of a service group ID(s) and a service ID(s) indicating the corresponding transaction.

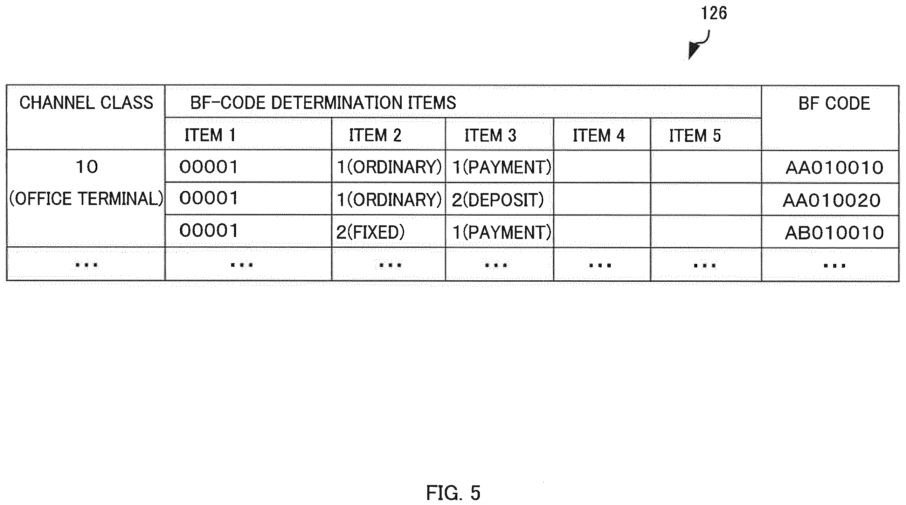

Fig. 5 is a diagram illustrating an example of the configuration of the code-conversion definition table 126 in this embodiment. The code-conversion definition table 126 in this embodiment is a table in which is defined the correspondence between the values of predetermined items in a transaction message and a BF code indicating a series of processing flows to be executed for the transaction processing, i.e. the above-mentioned business process. The code-conversion definition table 126 exemplarily illustrated in Fig. 5 is a collection of records in each of which BF-code determination items and a BF code are associated with each other with identification information on a channel 200 that has transmitted a transaction message as a key.

Among these, the BF-code determination items define items among the items in a transaction message that should be used to determine the BF code, and their values. In the example of Fig. 5, the BF code is defined as "AA010010" if a transaction message from an office terminal which is a channel 200 with identification information "10" has "Item 1" with a value of "00001", "Item 2" with a value of "1 (ordinary)", and "Item 3" with a value of "1 (payment)" .

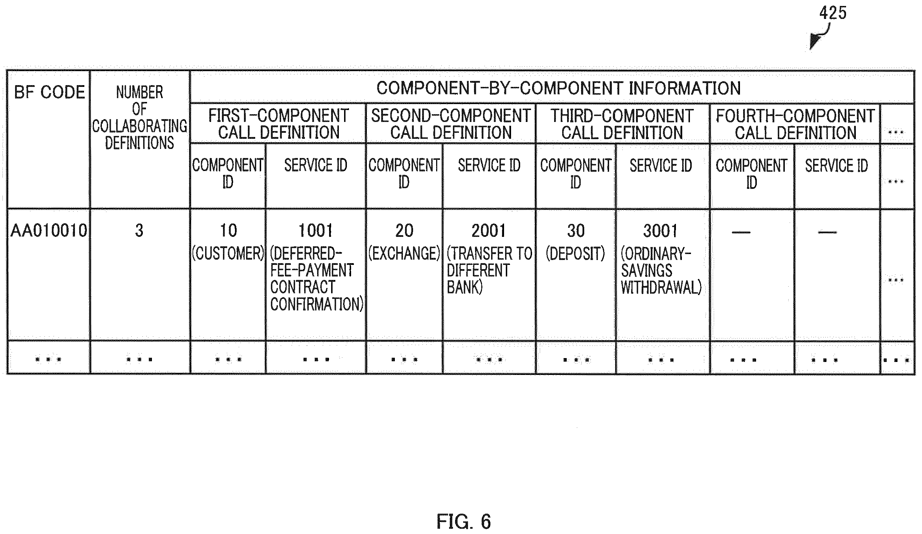

Fig. 6 is a diagram illustrating an example of the configuration of the transaction management table 425 in this embodiment. The transaction management table 425 in this embodiment is a table included in the business systems 400 and is a table in which are defined a group of components to be executed in response to a processing request received through the hub system 100 for a transaction message and the sequence of execution of these components, with the above-mentioned BF code indicated by this request as a key. In the transaction management table 425 exemplarily illustrated in Fig. 6, the number of collaborating definitions, which indicates the number of components to be executed, component call definitions, which list the components in the sequence of execution thereof starting from the "first" component, the IDs of these components, and the service IDs are stored in association with each other with the BF code as a key.

### ---Flow Example (Processing at Hub System)---

The actual procedure of the business collaboration method in this embodiment will be described below with reference to drawings. The various actions in the business collaboration method to be described below are implemented by the program included in the storage apparatus of at least the hub system 100 among the hub system 100 and the business systems 400, included in the business collaboration system 10, the program being read out onto the corresponding memory and executed. Further, this program includes codes for performing the various actions to be described below. Note that the business assumed here can be "withdrawing money from an ordinary savings account and transferring it to a foreign-currency savings account in a foreign exchange system" as mentioned earlier but is not limited thereto.

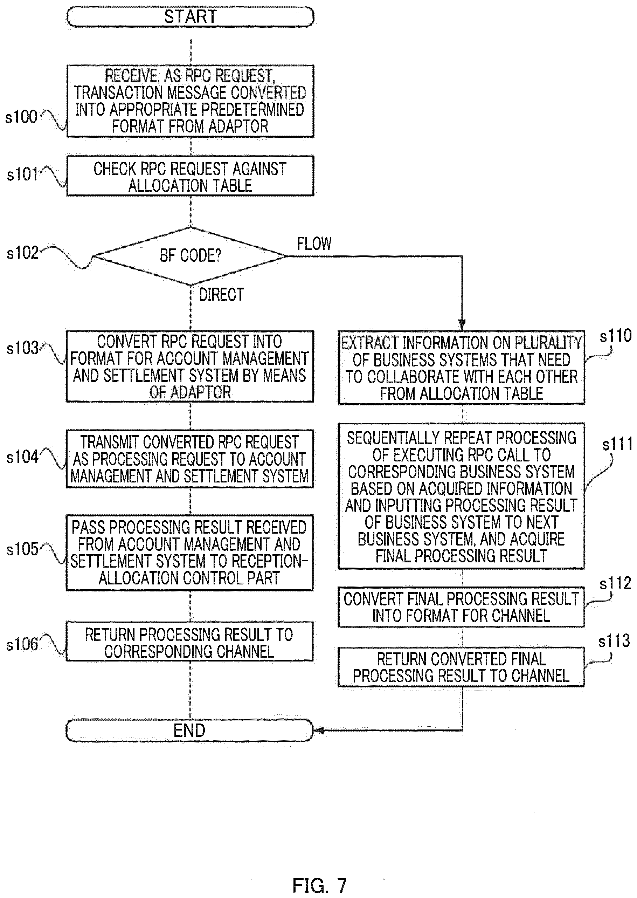

Fig. 7 is a flowchart illustrating Processing Procedure Example 1 of the business collaboration method in this embodiment. The subject that executes the processing here is the above-mentioned reception-allocation control part 121 of the hub system 100. As already mentioned, transactions through the hub system 100 include both independent account management and settlement transactions, which require quickness, and transactions involving collaboration between a plurality of business systems 400, and differ in required level of performance and purpose of processing. For this reason, the processing by the reception-allocation control part 121 allocates each transaction to an independent account management and settlement transaction or a transaction involving collaboration between business systems to implement a transaction with the required characteristics.

This reception-allocation control part 121 of the hub system 100 receives an RPC (Remote Procedure Call) request from the adaptor 110 (s100), the RPC request being a transaction message received from a channel 200 and converted by the adaptor 110 into an appropriate predetermined format. The reception-allocation control part 121 then checks the RPC request against the allocation table 125 to determine whether the BF code indicated by the RPC request is associated with "direct", which involves calling and utilizing only the account management and settlement system among the business systems 400, or "flow", which involves sequentially calling a plurality of other business systems 400 and utilizing their inputs and outputs (s101). In this embodiment, as described above, RPC has been exemplarily presented as a form of request to be received through the adaptor 110 and processed by the reception-allocation control part 121. Note, however, that the request is not limited to this. Meanwhile, description will be omitted in this embodiment for a case where the BF code is associated with "asynchronous".

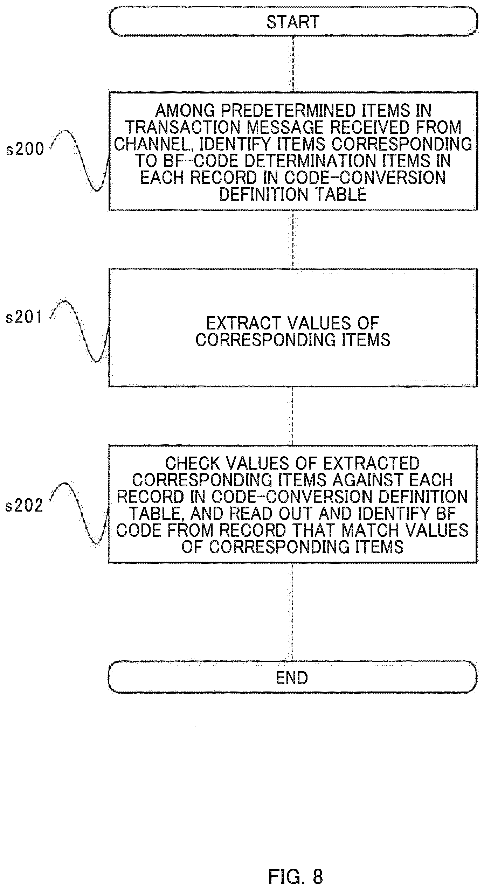

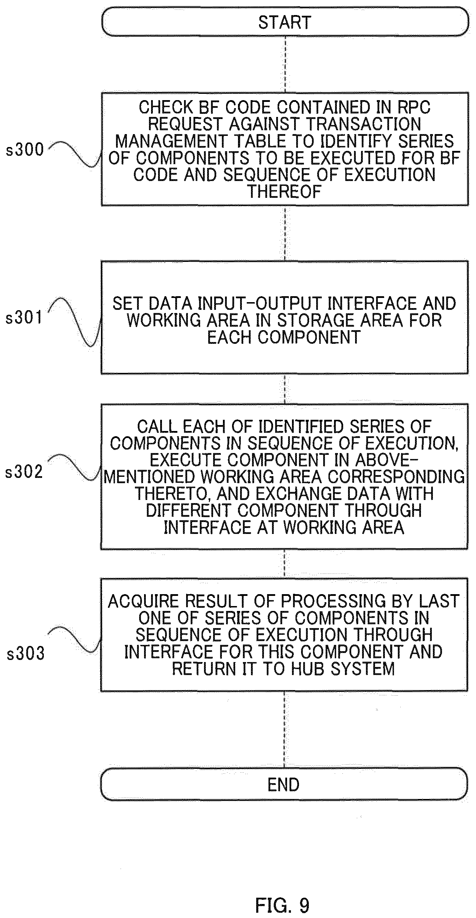

Description will now be given of processing of determining the BF code, which serves as a check key in checking the RPC request against the allocation table 125. Fig. 8 is a flowchart illustrating Processing Procedure Example 2 of the business collaboration method in this embodiment and in particular a flowchart illustrating a BF-code determination procedure. Also, Fig. 9 is an explanatory diagram illustrating an overview of processing of determining a BF code from a transaction message.

The BF-code determination procedure to be described here is assumed to be performed by the adaptor 110 along with various types of processing such as the message conversion and the protocol conversion executed upon receipt of a transaction message from a channel 200. The BF-code determination procedure may of course be executed by the reception-allocation control part 121 of the system collaboration platform 120.

Among predetermined items in the transaction message received from the channel 200, the adaptor 110 of the hub system 100 identifies those items corresponding to the BF-code determination items in each record in the above-mentioned code-conversion definition table 126 (s200) and extracts the values of these corresponding items (s201).

Then, the adaptor 110 checks the values of the corresponding items, extracted in Step s201, against each record in the above-mentioned code-conversion definition table 126, reads out a BF code from the record that match the values of the corresponding items, and identifies it as the BF code to be associated with the transaction required by the above-mentioned transaction message (s202) .

Returning to the description of the procedure in Fig. 7, if the result of above-mentioned Step s101 is such that the processing corresponding to the BF code of the RPC request is "direct" processing with the account management and settlement system (s102: direct), the reception-allocation control part 121 converts the above-mentioned RPC request into an appropriate format for the account management and settlement system 450 by means of the adaptor 115 (s103). Then, the reception-allocation control part 121 transmits this RPC request to the account management and settlement system 450 through the network 30 as a processing request (s104).

On the other hand, the account management and settlement system 450, upon receipt of the above-mentioned processing request, executes account management and settlement processing in accordance with the RPC request, and returns the result of this processing to the above-mentioned adaptor 115 through the network 30.

In this case, the adaptor 115 of the hub system 100 converts the processing result received from the account management and settlement system 450 into the data format supported by the channel 200 and passes it to the reception-allocation control part 121 (s105).

The reception-allocation control part 121 returns the processing result received from the adaptor 115 from the adaptor 110 to the corresponding channel 200 through the network 20 (s106), and terminals the processing.

On the other hand, if the result of above-mentioned Step s101 is such that the processing corresponding to the BF code of the RPC request is "flow" (s102: flow), the reception-allocation control part 121 hands over the processing to the flow control part 122, and this flow control part 122 extracts information on the plurality of business systems 400 that need to collaborate with each other for the corresponding transaction (examples: the number of collaborating systems, the collaborating system IDs, and the definitions of the business process, such as the service group IDs and the service IDs) from the allocation table 125 (s110).

Based on the pieces of information acquired in above-mentioned Step s110, such as the number of collaborating systems, the collaborating system names, the service group names, and the service names, the flow control part 122 sequentially repeats processing of executing RPC call to a corresponding business system 400 by means of the adaptor 115 and inputting a processing result obtained by the business system 400 to the next business system 400, and acquires the final processing result (s111).

Further, the flow control part 122 converts the final processing result, acquired in above-mentioned Step s111, into the appropriate format for the above-mentioned channel 200 by means of the adaptor 110 (s112), returns it to the channel 200 through the network 20 (s113), and terminates the processing.

### ---Flow Example (Processing at Operation System)---

Next, description will be given of execution and control of corresponding components in a case where the account management and settlement system 450 executes account management and settlement processing in accordance with an RPC request from the reception-allocation control part 121. Fig. 9 is a flowchart illustrating Processing Procedure Example 3 of the business collaboration method in this embodiment. An example of a target business in this embodiment can be assumed to be a business such as "searching customer information to check whether a customer has made a transfer-fee deferred-payment contract, transferring money to a different bank as a partner for exchange business, and withdrawing the money from the customer's ordinary savings account".

Here, the account management and settlement system 450 checks the BF code contained in the above-mentioned RPC request against the transaction management table 425 to identify the series of components to be executed for the BF code, the services provided by the components, and the sequence of execution thereof (s300). For example, by checking a BF code "AA010010" against the transaction management table 425 exemplarily illustrated in Fig. 6, it is possible to identify the IDs of the first to third components to be executed ("Component ID" in the figure) and the IDs of the services provided by the components ("Service ID" in the figure).

Then, the account management and settlement system 450 sets a data input-output interface and a working area in the storage area in the storage apparatus 401 for each component identified in above-mentioned Step s300 (s301).

Further, the account management and settlement system 450 calls each of the series of components identified in above-mentioned Step s300 and executes the component in the above-mentioned working area corresponding thereto in the sequence of execution thereof, and exchange data with a different component through the interface at the working area (s302).

Furthermore, the account management and settlement system 450 acquires the results of the processing by the last one of the above-mentioned series of components in the sequence of execution and a different component(s) through the above-mentioned interfaces for the components, edits them by, for example, combining them in an appropriate manner as needed (processing by the response-information edit program 422), returns the edited results to the hub system 100 through the network 30 (s303), and terminates the processing.

The best mode for carrying out the present invention and the like have been specifically described above. However, the present invention is not limited to these, but can be changed in various ways without departing from the gist thereof.

According to this embodiment, it is possible to enhance the quickness and the efficiency of processing involved in collaboration between business systems of a financial institution.

The statement of this description makes at least the following clear. Specifically, the business collaboration system in this embodiment may be such that: the storage apparatus stores the allocation table in which a mode of collaboration for transaction processing required to achieve a predetermined or higher level of quickness as the required quality is defined as one which involves issuing the processing request to and acquiring the processing result from a predetermined or smaller number of predetermined business systems, and a mode of collaboration for transaction processing required to achieve the predetermined or lower level of quickness as the required quality is defined as one which involves sequentially issuing the processing request to and acquiring the processing result from the predetermined or larger number of predetermined business systems; in the identification of the mode of collaboration between business systems, the computation apparatus checks the predetermined information contained in the transaction message obtained from the channel or any of the business systems against the allocation table and identifies a mode of collaboration between business systems for the corresponding transaction processing in accordance with a required level of quickness; and in the execution of the processing of returning the processing result to the channel, the computation apparatus operates based on the identified mode of collaboration to issue the processing request to and acquire the processing result from the predetermined or smaller number of predetermined business systems for the transaction processing requiring the predetermined or higher level of quickness, or to sequentially issue the processing request to and acquire the processing result from the predetermined or larger number of predetermined business systems for the transaction processing requiring the predetermined or lower level of quickness, and returns the processing result to the channel.

In this way, for a business such as an account management and settlement business, which strongly requires quickness, it is possible to directly request a single business system to execute processing for the transaction message, and to acquire the result of the processing and return it to the channel without a series of data exchange actions between many business systems, for example. Hence, the quickness and the efficiency of the processing as a whole are enhanced.

Also, the business collaboration system in this embodiment may be such that: the storage apparatus stores the allocation table in which a mode of collaboration for transaction processing required to achieve a predetermined or higher level of quickness as the required quality and involving processing by a account management and settlement system is defined as one which involves issuing the processing request to and acquiring the processing result from the account management and settlement system, and a mode of collaboration for transaction processing other than the transaction processing involving the processing by the account management and settlement system is defined as one which involves sequentially issuing the processing request to and acquiring the processing result from a plurality of predetermined business systems; in the identification of the mode of collaboration between business systems, the computation apparatus checks the predetermined information contained in the transaction message obtained from the channel or any of the business systems against the allocation table and identifies a mode of collaboration between business systems for the corresponding transaction processing in accordance with whether or not the corresponding transaction processing is the transaction processing involving the processing by the account management and settlement system; and in the execution of the processing of returning the processing result to the channel, the computation apparatus operates based on the identified mode of collaboration to issue the processing request to and acquire the processing result from the account management and settlement system for the transaction processing involving the processing by the account management and settlement system, or to sequentially issue the processing request to and acquire the processing result from the plurality of predetermined business systems for the other transaction processing, and returns the processing result to the channel.

In this way, for a business such as an account management and settlement business, which strongly requires quickness, it is possible to directly request the account management and settlement system to execute processing for the transaction message, and to acquire the result of the processing very quickly. On the other hand, for businesses which do not require quickness as much as account management and settlement businesses and need collaboration between a plurality of business systems, it is possible to acquire the result of processing involving a series of data exchange actions between the business systems. Hence, quickness is achieved selectively for account management and settlement businesses, which require quickness. Consequently, the efficiency of the processing as a whole is enhanced.

Also, the business collaboration system in this embodiment may be such that: the storage apparatus further stores a definition table in which is defined a correspondence between a value of a predetermined item in the transaction message and identification information identifying a series of processing flows of the issuance of the request and the acquisition to be executed for the transaction processing; the storage apparatus stores the allocation table in which the identification information is associated with the transaction processing that is allocatable by the required quality, and the mode of collaboration between business systems is defined for the identification information; and in the identification of the mode of collaboration between business systems, the computation apparatus checks the value of the predetermined item contained in the transaction message obtained from the channel or any of the business systems against the definition table to identify the identification information on the processing flows for the corresponding transaction processing, and checks the identification information against the allocation table to identify a mode of collaboration between business systems for the transaction processing.

In this way, identification information, with which a processing flow(s) to be performed for a transaction with one or more business systems is uniquely determined within the business collaboration system, is identified from a transaction message, and the issuing of the processing request and the acquisition of the processing result mentioned above can be done in accordance with the mode of collaboration between business systems corresponding to this identification information.

Also, the business collaboration system in this embodiment may further include a business system including: a communication apparatus configured to receive the processing request for the transaction message and return the processing result; a storage apparatus storing a management table in which a group of components to be executed and a sequence of execution of the components are defined in association with a predetermined attribute of the transaction processing indicated by the request; and a computation apparatus configured to check predetermined information contained in the request against the management table to identify the series of components to be executed for the request and the sequence of execution thereof, set a data input-output interface and a working area in a storage area in the storage apparatus for each of the identified components, call the series of components and execute the components in the corresponding working areas in the sequence of execution, exchange data between the components through the interfaces at the working areas, and return a result of processing by the series of components via the communication apparatus.

In this way, the configuration is such that components to be executed by business systems in accordance with a transaction message are each executed in a working area given on a component-by-component basis, and data input and output involved in the execution of the component are also performed through an interface provided on a component-by-component basis in the storage area. Using a resource divided for each component as described above reduces the processing load on the business systems. Consequently, the quickness and the efficiency of the processing by the business collaboration system as a whole are enhanced.

Also, the business collaboration method in this embodiment may be such that: in the storage apparatus, the computer system stores the allocation table in which a mode of collaboration for transaction processing required to achieve a predetermined or higher level of quickness as the required quality is defined as one which involves issuing the processing request to and acquiring the processing result from a predetermined or smaller number of predetermined business systems, and a mode of collaboration for transaction processing required to achieve the predetermined or lower level of quickness as the required quality is defined as one which involves sequentially issuing the processing request to and acquiring the processing result from the predetermined or larger number of predetermined business systems; in the identification of the mode of collaboration between business systems, the computer system checks the predetermined information contained in the transaction message obtained from the channel or any of the business systems against the allocation table and identifies a mode of collaboration between business systems for the corresponding transaction processing in accordance with a required level of quickness; and in the execution of the processing of returning the processing result to the channel, the computer system operates based on the identified mode of collaboration to issue the processing request to and acquire the processing result from the predetermined or smaller number of predetermined business systems for the transaction processing requiring the predetermined or higher level of quickness, or to sequentially issue the processing request to and acquire the processing result from the predetermined or larger number of predetermined business systems for the transaction processing requiring the predetermined or lower level of quickness, and returns the processing result to the channel.

Also, the business collaboration method in this embodiment may be such that: in the storage apparatus, the computer system stores the allocation table in which a mode of collaboration for transaction processing required to achieve a predetermined or higher level of quickness as the required quality and involving processing by a account management and settlement system is defined as one which involves issuing the processing request to and acquiring the processing result from the account management and settlement system, and a mode of collaboration for transaction processing other than the transaction processing involving the processing by the account management and settlement system is defined as one which involves sequentially issuing the processing request to and acquiring the processing result from a plurality of predetermined business systems; in the identification of the mode of collaboration between business systems, the computer system checks the predetermined information contained in the transaction message obtained from the channel or any of the business systems against the allocation table and identifies a mode of collaboration between business systems for the corresponding transaction processing in accordance with whether or not the corresponding transaction processing is the transaction processing involving the processing by the account management and settlement system; and in the execution of the processing of returning the processing result to the channel, the computer system operates based on the identified mode of collaboration to issue the processing request to and acquire the processing result from the account management and settlement system for the transaction processing involving the processing by the account management and settlement system, or to sequentially issue the processing request to and acquire the processing result from the plurality of predetermined business systems for the other transaction processing, and returns the processing result to the channel.

Also, the business collaboration method in this embodiment may be such that: in the storage apparatus, the computer system further stores a definition table in which is defined a correspondence between a value of a predetermined item in the transaction message and identification information identifying a series of processing flows of the issuance of the request and the acquisition to be executed for the transaction processing; the computer system stores the allocation table in which the identification information is associated with the transaction processing that is allocatable by the required quality, and the mode of collaboration between business systems is defined for the identification information; and in the identification of the mode of collaboration between business systems, the computer system checks the value of the predetermined item contained in the transaction message obtained from the channel or any of the business systems against the definition table to identify the identification information on the processing flows for the corresponding transaction processing, and checks the identification information against the allocation table to identify a mode of collaboration between business systems for the transaction processing.

Also, the business collaboration method in this embodiment may use a business system including a communication apparatus configured to receive the processing request for the transaction message and return the processing result and a storage apparatus storing a management table in which a group of components to be executed and a sequence of execution of the components are defined in association with a predetermined attribute of the transaction processing indicated by the request, and cause the business system to: check predetermined information contained in the request against the management table to identify the series of components to be executed for the request and the sequence of execution thereof; set a data input-output interface and a working area in a storage area in the storage apparatus for each of the identified components; call the series of components and execute the components in the corresponding working areas in the sequence of execution; exchange data between the components through the interfaces at the working areas; and return a result of processing by the series of components via the communication apparatus.

### [Reference Signs List]

20, 30 network
10 business collaboration system
100 hub system
101 storage apparatus
102 program
103 memory
104 computation apparatus
105 communication apparatus
110, 115 adaptor
120 system collaboration platform
121 reception-allocation control part
122 flow control part
125 allocation table
126 code-conversion definition table
130 online-batch processing control platform
200 channel
300 external center
400 business system
401 storage apparatus
402 program
403 memory
404 computation apparatus
405 communication apparatus
425 transaction management table (management table)
450 account management and settlement system
460 foreign exchange system

## Claims

1. A business collaboration system **characterized in that** the business collaboration system comprises:
a communication apparatus configured to execute communication processing with each channel and business systems of a financial institution;
a storage apparatus storing an allocation table in which a mode of collaboration between business systems is defined by required quality of transaction processing in the financial institution; and
a computation apparatus configured to
check predetermined information contained in a transaction message obtained from the channel or any of the business systems against the allocation table and identify a mode of collaboration between business systems for corresponding transaction processing,
issue a processing request for the transaction message to one or more of the business systems and acquire a processing result therefrom as a response to the request in accordance with definitions of collaborating targets and a sequence of collaboration indicated by the mode of collaboration, and
execute processing of returning the processing result to the channel.

2. The business collaboration system according to claim 1, **characterized in that**
the storage apparatus stores the allocation table in which
a mode of collaboration for transaction processing required to achieve a predetermined or higher level of quickness as the required quality is defined as one which involves issuing the processing request to and acquiring the processing result from a predetermined or smaller number of predetermined business systems, and
a mode of collaboration for transaction processing required to achieve the predetermined or lower level of quickness as the required quality is defined as one which involves sequentially issuing the processing request to and acquiring the processing result from the predetermined or larger number of predetermined business systems,
in the identification of the mode of collaboration between business systems, the computation apparatus checks the predetermined information contained in the transaction message obtained from the channel or any of the business systems against the allocation table and identifies a mode of collaboration between business systems for the corresponding transaction processing in accordance with a required level of quickness, and
in the execution of the processing of returning the processing result to the channel, the computation apparatus operates based on the identified mode of collaboration to issue the processing request to and acquire the processing result from the predetermined or smaller number of predetermined business systems for the transaction processing requiring the predetermined or higher level of quickness, or to sequentially issue the processing request to and acquire the processing result from the predetermined or larger number of predetermined business systems for the transaction processing requiring the predetermined or lower level of quickness, and returns the processing result to the channel.

3. The business collaboration system according to claim 1, **characterized in that**
the storage apparatus stores the allocation table in which
a mode of collaboration for transaction processing required to achieve a predetermined or higher level of quickness as the required quality and involving processing by a account management and settlement system is defined as one which involves issuing the processing request to and acquiring the processing result from the account management and settlement system, and
a mode of collaboration for transaction processing other than the transaction processing involving the processing by the account management and settlement system is defined as one which involves sequentially issuing the processing request to and acquiring the processing result from a plurality of predetermined business systems,
in the identification of the mode of collaboration between business systems, the computation apparatus checks the predetermined information contained in the transaction message obtained from the channel or any of the business systems against the allocation table and identifies a mode of collaboration between business systems for the corresponding transaction processing in accordance with whether or not the corresponding transaction processing is the transaction processing involving the processing by the account management and settlement system, and
in the execution of the processing of returning the processing result to the channel, the computation apparatus operates based on the identified mode of collaboration to issue the processing request to and acquire the processing result from the account management and settlement system for the transaction processing involving the processing by the account management and settlement system, or to sequentially issue the processing request to and acquire the processing result from the plurality of predetermined business systems for the other transaction processing, and returns the processing result to the channel.

4. The business collaboration system according to claim 1, **characterized in that**
the storage apparatus further stores a definition table in which is defined a correspondence between a value of a predetermined item in the transaction message and identification information identifying a series of processing flows of the issuance of the request and the acquisition to be executed for the transaction processing,
the storage apparatus stores the allocation table in which the identification information is associated with the transaction processing that is allocatable by the required quality, and the mode of collaboration between business systems is defined for the identification information, and
in the identification of the mode of collaboration between business systems, the computation apparatus checks the value of the predetermined item contained in the transaction message obtained from the channel or any of the business systems against the definition table to identify the identification information on the processing flows for the corresponding transaction processing, and checks the identification information against the allocation table to identify a mode of collaboration between business systems for the transaction processing.

5. The business collaboration system according to claim 1, **characterized in that** the business collaboration system further comprises a business system including
a communication apparatus configured to receive the processing request for the transaction message and return the processing result,
a storage apparatus storing a management table in which a group of components to be executed and a sequence of execution of the components are defined in association with a predetermined attribute of the transaction processing indicated by the request, and
a computation apparatus configured to
check predetermined information contained in the request against the management table to identify the series of components to be executed for the request and the sequence of execution thereof,
set a data input-output interface and a working area in a storage area in the storage apparatus for each of the identified components,
call the series of components and execute the components in the corresponding working areas in the sequence of execution,
exchange data between the components through the interfaces at the working areas, and
return a result of processing by the series of components via the communication apparatus.

6. A business collaboration method using a computer system including a communication apparatus configured to execute communication processing with each channel and business systems of a financial institution and a storage apparatus storing an allocation table in which a mode of collaboration between business systems is defined by required quality of transaction processing in the financial institution, **characterized in that** the method comprises causing the computer system to:
check predetermined information contained in a transaction message obtained from the channel or any of the business systems against the allocation table and identify a mode of collaboration between business systems for corresponding transaction processing;
issue a processing request for the transaction message to one or more of the business systems and acquire a processing result therefrom as a response to the request in accordance with definitions of collaborating targets and a sequence of collaboration indicated by the mode of collaboration; and
execute processing of returning the processing result to the channel.

7. The business collaboration system according to claim 6, **characterized in that**
in the storage apparatus, the computer system stores the allocation table in which
a mode of collaboration for transaction processing required to achieve a predetermined or higher level of quickness as the required quality is defined as one which involves issuing the processing request to and acquiring the processing result from a predetermined or smaller number of predetermined business systems, and
a mode of collaboration for transaction processing required to achieve the predetermined or lower level of quickness as the required quality is defined as one which involves sequentially issuing the processing request to and acquiring the processing result from the predetermined or larger number of predetermined business systems,
in the identification of the mode of collaboration between business systems, the computer system checks the predetermined information contained in the transaction message obtained from the channel or any of the business systems against the allocation table and identifies a mode of collaboration between business systems for the corresponding transaction processing in accordance with a required level of quickness, and
in the execution of the processing of returning the processing result to the channel, the computer system operates based on the identified mode of collaboration to issue the processing request to and acquire the processing result from the predetermined or smaller number of predetermined business systems for the transaction processing requiring the predetermined or higher level of quickness, or to sequentially issue the processing request to and acquire the processing result from the predetermined or larger number of predetermined business systems for the transaction processing requiring the predetermined or lower level of quickness, and returns the processing result to the channel.

8. The business collaboration method according to claim 6, **characterized in that**
in the storage apparatus, the computer system stores the allocation table in which
a mode of collaboration for transaction processing required to achieve a predetermined or higher level of quickness as the required quality and involving processing by an account management and settlement system is defined as one which involves issuing the processing request to and acquiring the processing result from the account management and settlement system, and
a mode of collaboration for transaction processing other than the transaction processing involving the processing by the account management and settlement system is defined as one which involves sequentially issuing the processing request to and acquiring the processing result from a plurality of predetermined business systems,
in the identification of the mode of collaboration between business systems, the computer system checks the predetermined information contained in the transaction message obtained from the channel or any of the business systems against the allocation table and identifies a mode of collaboration between business systems for the corresponding transaction processing in accordance with whether or not the corresponding transaction processing is the transaction processing involving the processing by the account management and settlement system, and
in the execution of the processing of returning the processing result to the channel, the computer system operates based on the identified mode of collaboration to issue the processing request to and acquire the processing result from the account management and settlement system for the transaction processing involving the processing by the account management and settlement system, or to sequentially issue the processing request to and acquire the processing result from the plurality of predetermined business systems for the other transaction processing, and returns the processing result to the channel.

9. The business collaboration method according to claim 6, **characterized in that**
in the storage apparatus, the computer system further stores a definition table in which is defined a correspondence between a value of a predetermined item in the transaction message and identification information identifying a series of processing flows of the issuance of the request and the acquisition to be executed for the transaction processing,
the computer system stores the allocation table in which the identification information is associated with the transaction processing that is allocatable by the required quality, and the mode of collaboration between business systems is defined for the identification information, and
in the identification of the mode of collaboration between business systems, the computer system checks the value of the predetermined item contained in the transaction message obtained from the channel or any of the business systems against the definition table to identify the identification information on the processing flows for the corresponding transaction processing, and checks the identification information against the allocation table to identify a mode of collaboration between business systems for the transaction processing.

10. The business collaboration method according to claim 6, **characterized in that** the business collaboration method uses a business system including a communication apparatus configured to receive the processing request for the transaction message and return the processing result and a storage apparatus storing a management table in which a group of components to be executed and a sequence of execution of the components are defined in association with a predetermined attribute of the transaction processing indicated by the request, and causes the business system to:
check predetermined information contained in the request against the management table to identify the series of components to be executed for the request and the sequence of execution thereof;
set a data input-output interface and a working area in a storage area in the storage apparatus for each of the identified components;
call the series of components and execute the components in the corresponding working areas in the sequence of execution;
exchange data between the components through the interfaces at the working areas; and
return a result of processing by the series of components via the communication apparatus.
